# EUROPEAN PATENT SPECIFICATION

(11) **EP 3 135 540 B1**
(45) Date of publication and mention of the grant of the patent: **06.06.2018**
(21) Application number: 15275188.9
(22) Date of filing: 25.08.2015
(51) Int. Cl.: B60R 13/10

(54) **TAMPER-RESISTANT VEHICLE IDENTIFICATION PLATE**
MANIPULATIONSSICHERE FAHRZEUGIDENTIFIKATIONSPLATTE
PLAQUE D'IDENTIFICATION DE VÉHICULE INVIOLABLE

(43) Date of publication of application: 01.03.2017
(73) Proprietor: Bestplate Limited, London WC2B 5AH (GB)
(72) Inventor: McNamee, Tony, Blackpool, Lancashire FY4 3EF (GB)
(74) Representative: Wilson Gunn

(56) References cited:
- DE-A1- 2 527 751
- DE-U1- 20 022 407
- US-A- 2 213 909

## Description

### Technical Field of the Invention

The present invention relates to tamper-resistant vehicle identification plates.

### Background to the Invention

Vehicle identification plates that are forcibly removed from a vehicle may be illegally reused to disguise the identity of another vehicle, or fraudulently sold to motorists by whom the stolen identification plates will be unusable. It is therefore desirable to prevent, obstruct, slow, or otherwise deter the theft of identification plates, and/or to reveal evidence of any tampering so that the removed plate cannot be reused and/or easily replaced. On the basis that it attempts to solve the same problem as the claimed invention of deterring a person from stealing a licence plate when it is attached to a vehicle, DE2527751A1 is considered to be the closest prior art. DE2527751A1 discloses one or more support plates, having fastening threads, for supporting a number plate. The fastening threads comprise conically widening bores, widening in the direction of the plate, so a fastening screw impresses the plate into the bore. An identification plate with holes through which it is simply screwed to a vehicle body can be very easily and quickly removed by loosening the screws. It is therefore common to provide a backing plate or frame that is securely screwed to the vehicle body and to which the identification plate is then adhesively bonded. The identification plate covers and conceals the screws, so that removing the plate typically requires significant force to overcome the adhesive bond. This may damage the plate, safely preventing its misuse, and should significantly hamper the attempted removal of the plate, so that a thief wishing to remain unnoticed is dissuaded from wrestling with the plate for many minutes to separate it from the vehicle.

However, the backing frame is typically screwed into threaded holes in the vehicle body whose fixed positions are predetermined by the vehicle manufacturer and
thus may be well known to a person familiar with the particular make or model of vehicle, even though the screws are concealed from view by the identification plate. It is therefore increasingly common for skilled criminals to drill through the plate at precisely the correct locations to expose each mounting screw. The screws can then be loosened or drilled out and the backing plate removed from the vehicle. The process can be completed very quickly using power tools with minimal damage to the plate.

Accordingly, objects of embodiments of the present invention include the provision of a securely supported identification plate and a support for securing an identification plate that overcomes the aforementioned problem, and/or that prevents, obstructs, slows, and/or deters the removal of an identification plate from a vehicle.

### Summary of the Invention

According to a first aspect of the invention, there is provided a tamper-resistant vehicle identification plate support comprising:
(a) a mounting bracket having therein a first slot and a mounting aperture through which the bracket is tamper-resistantly securable to a fixation point of a vehicle;
   and
(b) a backing having therein a second slot and being arranged to receive a vehicle identification plate, adhesively bonded to the backing, to cover the second slot,
wherein the backing and bracket are positionable adjacent to one another, so that the first and second slots are at least partially overlapping to enable a fastener to be passed through the first and second slots to fasten the backing to the bracket, and so that the relative positions of the backing and bracket at least partly predetermine the location of the overlap.

This allows or encourages the fastener to be unpredictably located relative to the fixation points on the vehicle, so that knowledge of the vehicle geometry is not sufficient to allow location of the fastener when concealed by an identification plate. Although time-consuming, an identification plate may eventually be removed from the backing-such as during replacement or repair-and the fastener can then be removed to release the backing plate from the vehicle. It is therefore unnecessary to remove the bracket from the vehicle, so immovable, heavily reinforced, and/or otherwise tamper-resistant fittings may be used to secure the bracket to the vehicle.

The mounting bracket may comprise a plate, such as formed from a mild steel or another steel or metal alloy, may comprise a recess about the mounting aperture, may comprise a spacing lug, and may comprise a press-formed depression in the plate defining, on opposite faces of the plate, a spacing lug and a recess about a mounting hole.

The support may comprise a screw for securing the bracket to the fixation point, which may be a tamper-resistant screw.

The support may comprise a protective cap shielding the mounting aperture, the fixation point, and/or the mounting screw. The cap may be formed of a high-strength and/or abrasion-resistant alloy, such as manganese steel, may be mounted on the bracket, may be mounted in a recess of the bracket, and may be unreleasably secured to the bracket, such as by interference fit, welding, or a strong adhesive.

The backing and bracket may be positionable adjacent to one another so that the first and second slots are nonparallel in said overlapping slot area, may be positionable
adjacent to one another so that the first and second slots intersect at said overlapping slot area, and may be positionable adjacent to one another so that the first and second slots intersect an angle of between 15 and 165 degrees, preferably between 30 and 150 degrees, more preferably between 45 and 135 degrees, still more preferably between 60 and 120 degrees, and most preferably between 75 and 105 degrees.

At least one of said first and second slot may be substantially linear, at least one may be curved, and at least one may be arcuate. One of said first and second slot may be substantially straight while the other said slot is curved. The second slot may be locally reinforced, and may be formed through a reinforcing plate in the backing.

The backing may take the general form of a lipped tray, and may comprise a recess for receiving an identification plate, which recess may closely conform to the edges of an identification plate. The support or the backing may comprise a projecting lip arranged to cover an edge of an identification plate received by the backing, which may be arranged to cover at least a top edge and two side edges of an identification plate received by the backing, may be arranged to cover at least part of a bottom edge of an identification plate received by the backing, may be adapted to engage with at least one edge of an identification plate to provide a snap fit, and may be adapted to at least partially encase an edge of an identification plate to provide an interlocking fit between the support and said edge of the plate.

The support may be arranged to conceal the bracket when supporting an identification plate on a vehicle, such as by means of a rearwardly projecting lip, and may support a vehicle identification plate mounted on the backing and covering the second slot.

The bracket may comprise a plurality of said first slots, and the backing may comprise a plurality of said second slots. The first slots and/or the second slots may be substantially parallel, or may be radially or spirally disposed. The first slots may be disposed about the mounting aperture, and may be disposed in a ring concentric with the mounting aperture.

The bracket may comprise a plurality of said mounting apertures. Alternatively, the bracket may comprise a single mounting aperture about which it is rotatable when securing it to a vehicle. The support may comprise two or more said brackets across which, together, the backing is fastenable.

The backing may comprise a tray with a discontinuous peripheral lip and a longitudinal ridge projecting inwardly from the lip to define a channel, the tray being arranged to receive an identification plate so that, when an identification plate is received in the tray:
(a) the lip substantially covers and closely conforms to at least one edge of the plate;
(b) the tray exposes at least part of a longitudinal edge of the plate that is not covered by the lip; and
(c) the ridge engages with the plate to constrain within the channel a longitudinal edge of the plate opposite said at least partly exposed edge of the plate,
so that the tray can alternatively accommodate each of a rectangular identification plate and an identification plate having a projecting tab.

The supporting tray is thus capable of securing identification plates with standard and non-standard shapes, while the closely conforming lip and overhanging ridge opposite the exposed edge of the plate provide a protective channel that shields the plate from the ingress of solvents, tools, or cutting wires. This provides a tamper-resistant support despite the exposure of a potentially protruding part of the plate, so that security is not compromised by the versatility of the backing.

The lip may be arranged to cover and/or closely conform to at least three edges of a substantially rectangular identification plate received in the tray, and may be arranged to cover and/or closely conform to part ofthe exposed edge of a substantially rectangular identification plate received in the tray. The lip may be arranged to cover and/or closely conform to a top edge of an identification plate, and may be arranged to expose at least part of a bottom edge of an identification plate. The lip may be arranged to resiliently engage an edge of an identification plate received in the tray to provide a snap fit. The tray may further comprise a frangibly removable portion arranged to expose, when so removed, said at least partly exposed edge of a substantially rectangular plate.

The support may have a vehicle identification plate mounted thereto, which may be adhesively bonded to the tray, may be constrained within the channel, may tightly engage with the channel, and may abut the longitudinal ridge. The plate may comprise a substantially rectangular major portion with a longitudinal tab projecting laterally therefrom. The tab may display security-related information, identification details, and/or contact information. It may be substantially the same colour as the lip ofthe tray so that it appears to be part of the lip and/or to disguise the presence of a discontinuity in the lip.

According to a second aspect of the invention, there is provided a vehicle comprising: a fixation point for a vehicle identification plate; and a tamper-evident support, as described above, secured to the fixation point.

The or each said mounting bracket may be secured to the vehicle by one or more screws, may be secured to the vehicle by at least one tamper-resistant screw, and may be irreversibly secured to the vehicle.

According to a third aspect of the invention, there is provided a method of securing an identification plate to a vehicle, the method including the steps of:
(a) securing a mounting bracket to a fixation point on a vehicle;
(b) positioning a backing over the bracket so that a slot in the backing and a slot in the bracket at least partly overlap;
(c) fastening the backing to the bracket at a location where the slots overlap;
(d) affixing an identification plate to the backing to cover a slot in the backing, by adhesively bonding the identification plate to the backing; and
(e) selecting from a range of valid possibilities the position(s), relative to the fixation point, of at least one of:
   (i) the bracket when securing it to the vehicle;
   (ii) the back when fastening it to the mounting bracket; and
   (iii) the location at which to fasten the back to the bracket.

Securing the mounting bracket to the fixation point may include the step of driving a screw through a mounting hole in the bracket into the fixation point of the vehicle, and may include the step of aligning a mounting hole in the bracket with the fixation point and orienting the bracket, relative to the mounting hole, at random or at random within a predefined range. The method may include the step of shielding the mounting hole with a protective cap, such as by securing a protective cap to the bracket.

The backing may be positioned over the bracket so that the slots intersect, such as so that the slots intersect first and second slots intersect an angle of between 15 and 165 degrees, preferably between 30 and 150 degrees, more preferably between 45 and 135 degrees, still more preferably between 60 and 120 degrees, and most preferably between 75 and 105 degrees.

The method may include the step of inserting a fastener into the slots at the location where they overlap.

The third aspect of the invention may incorporate any combination ofthe features of the first and second aspects, and vice versa.

### Detailed Description of the Invention

In order that the invention may be more clearly understood, embodiments thereof will now be described, by way of example only, with reference to the accompanying drawings, of which:
- **Figure 1**: is an exploded perspective drawing of parts of a tamper-resistant identification plate assembly, showing mounting brackets and a backing plate;
- **Figure 2**: is a rear view of part of the assembly of Figure 1;
- **Figure 3**: shows simplified orthographic views of the backing plate of Figure 1;
- **Figure 4**: shows simplified orthographic views of another backing plate suitable for use in the assembly of Figure 1, with an identification plate mounted on the backing plate; and
- **Figure 5**: shows a set of simplified orthographic views of each of three alternative mounting brackets for use in the arrangement of Figure 1.

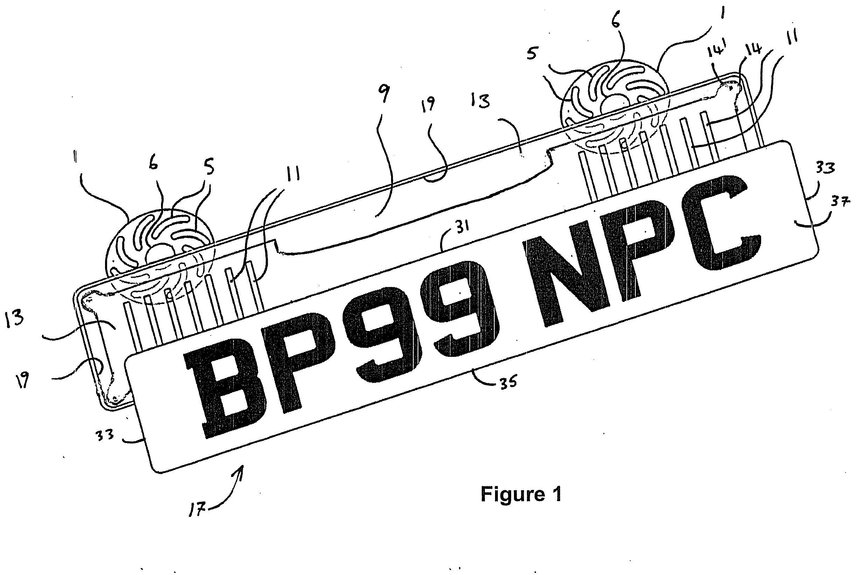

Parts for a tamper-resistant vehicle identification plate assembly are shown in Figures 1 to 3. Two circular brackets (1) are each secured to a respective threaded fixture on a motor vehicle body using a hardened steel screw located through a central aperture (3) in the bracket (1). A number of arcuate slots (5) are radially disposed in a ring about the central aperture (3) in the form of a spiral. When tightening the mounting screw, the bracket (1) can be rotated about its central aperture (3), so that it may be secured to the vehicle in any orientation-the orientation will be arbitrary since there is no obvious 'correct' way to orient a circular plate or a curved or spiral slot. Once the screw is fully tightened, the bracket (1) is firmly secured to the vehicle and cannot be rotated.

A disc-shaped protective cap (6) made of a high-strength, abrasion-resistant alloy, such as a manganese steel or a hardened/tempered steel, is then secured to the bracket (1) over the mounting hole (3) so that it shields the head of the screw to protect it from tampering (such as attacking it with a drill or other power tools). The cap (6) and/or a recess (8) in the bracket (1) may be slightly tapered-i.e. frusto-conical-to provide a taper-lock interference fit when the cap (6) is driven into the recess (8); or a similar effect could be achieved by shrink-fitting, welding, or using a strong adhesive to prevent the cap (6) from being easily detached from the bracket (1). Alternatively, or in addition, the mounting screw may be a tamper-resistant screw such as a pin-head, snake-eye, or one-way screw.

A backing plate (9) is then placed over the brackets (1). The backing plate (9) is preferably formed as a metal-reinforced polymer composite, although a relatively lightweight metal alloy or fibre-reinforced polymer composite may also be suitable. The backing (9) has corresponding slots (11) that are laid over those in the brackets, the backing plate slots (11) being reinforced by a metal plate (13) mounted on or embedded in the backing plate (9). The metal plate comprises two generally rectangular portions, in which the slots (11) are formed, connected by a central strip. The outer corners of the generally rectangular portions extend into radiused arms (14) through which mounting apertures (14') extend. These apertures are positioned so that they lie outside a designated readable area of a vehicle identification plate that may be mounted to the backing plate, enabling the identification plate to be fastened to the backing plate by fasteners which pass through a non-readable area of the identification plate and into the apertures (14') of the backing plate, if desired.

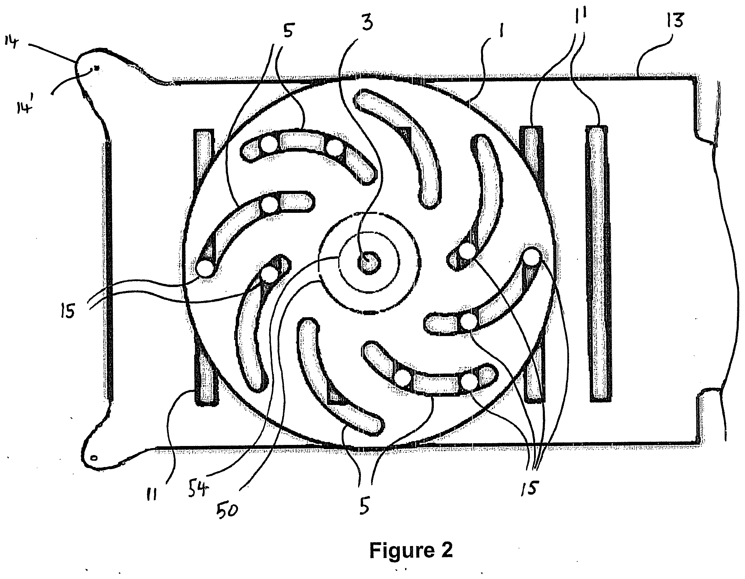

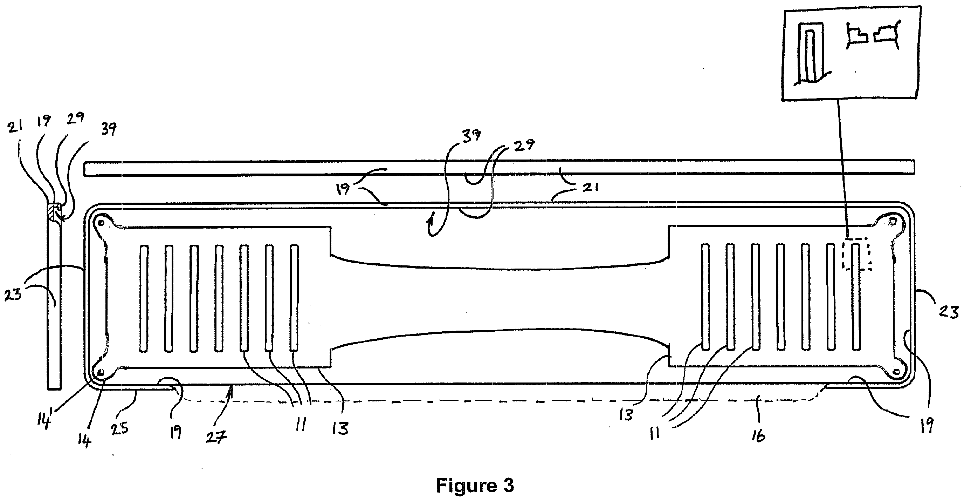

In the embodiment shown, the backing plate slots (11) are straight, vertical and parallel, although horizontal slots or any other shape, configuration, and orientation may be provided. The slots (11) are wider to the outer face of the backing plate, visible in figure 3, and narrower to the opposite side of the plate with a step formed between the wider and narrower parts of the slot generally half way through the depth of the slot. Fasteners (15) such as grub screws, self-tapping screws, or blind rivets are then inserted through the slots to fasten the backing plate to the brackets. The fasteners and the slot are sized so that a head of a fastener is received into the wider part of the slot so that it lies flush with or beneath the surface of the outer face of the backing plate. As indicated in Figure 2, the slots (5, 11) overlap, and preferably cross, at a number of locations, so that the fasteners (15) can be inserted at some or all of the places where the slots overlap. Nonparallel overlapping slots help to constrain an inserted fastener (15), such as a blind rivet, so that it slides in a stable manner into the opening formed by the intersecting slots (5, 11), remaining generally perpendicular to the surface ofthe bracket (1). If the overlaid slots were parallel, the fastener would be harder to handle while inserting it through the slots, as it could easily rock within the slot or fall out.

Once the fasteners (15) are tightened, the backing plate (9) will be firmly fastened to the bracket (1) and thereby to the vehicle. Additionally, anti-vibration pads may first be adhered to the rear of the backing plate (9) to be compressed against the bracket (1) and/or the vehicle when the fasteners (15) are tightened, so that the risk of the fasteners working loose over time is minimised. The identification plate (17) is then firmly affixed to the backing plate (9) using a layer of adhesive film or tape, so that it covers and conceals the slots (11) and the fasteners (15).

As shown in Figures 1 and 3, the backing plate (9) has the general form of a tray, with a lip (19) projecting at its perimeter along its top edge (21), both side edges (23), and part of the bottom edge (25). A gap (27) in the bottom part of the lip (19) is provided to accommodate a type of identification plate with a decorative tab projecting from its lower edge, although the lip (19) may span the whole of the bottom edge (25) instead if plain rectangular identification plates only are to be accommodated. Alternatively, the backing plate may include a projecting tab (16) as shown in broken lines in figure 3. This tab could then support information which would otherwise be displayed on the tab of a vehicle identification plate mounted to the backing plate.

When the identification plate (17) is inserted into the backing plate (9), the projecting lip (19) fits snugly around the identification plate (17) so that its edges (31, 33, 35) are covered and no significant intervening gap is provided. This helps to prevent the ingress of tools or solvents between the identification plate and backing plate in an attempt to force them apart or weaken the adhesive bond.

As shown in cross-section in Figure 3, the lip (19) along the top edge (21) has a descending ridge (29) that abuts the outer face (37) ofthe identification plate (17), so that the identification plate is constrained within a groove (39) encasing its top edge (31). This provides further protection against the ingress of tools and solvents, and helps to more securely fasten the identification plate (17) within the backing (9). It also compensates for the lack of a covering lip across part of the bottom edge (35) of the identification plate, providing a secure and tamper-resistant seating for the identification plate (17) so that it is difficult to detach from the backing plate (9) despite the absence of a complete lower lip. The lower edge (35) remains partially exposed, but in practice it is generally very much more difficult to introduce solvent or tools under the lower edge (35) of the identification plate (17) due in part to gravity and to the ergonomic awkwardness of operating a tool upwards in close proximity to the road surface. Furthermore, the top encasing lip (19, 29, 39) prevents insertion of a wire behind the identification plate in an attempt to slice the plate from the backing in the manner of a cheesewire.

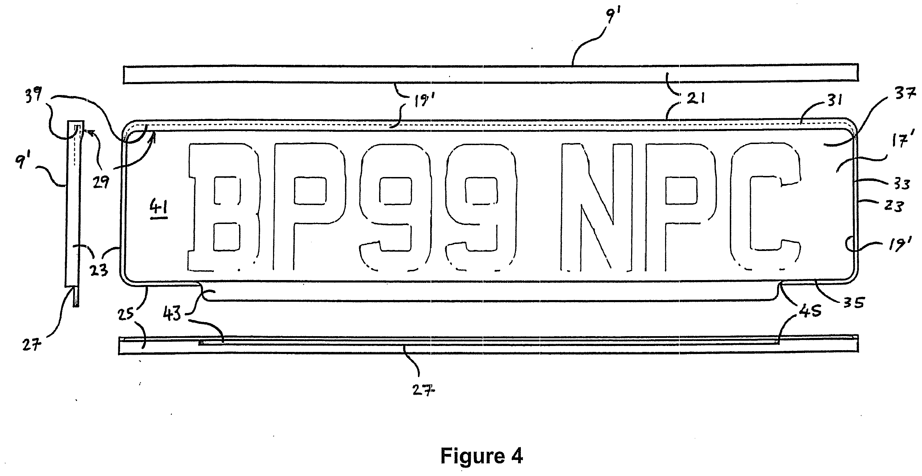

A similar backing plate (9') is shown in Figure 4 with an identification plate (17') attached. In this case, the lip (19') overhangs the top edge (31) but is flush with the side and bottom edges (33, 35) of the main body (41) of the identification plate (17'). As a further alternative, the top edge (31) of the plate may have a tongue or groove for engaging with the channel (39) or ridge (29) of the top lip (19'), so that no such overhang is necessary.

The identification plate (17') includes a longitudinal strip protruding laterally from, and within the same plane as, the main body (41) of the identification plate (17') to form an integral tab (43) that is preferably oriented downwards when the plate (17') is mounted on a vehicle. Such a tab (43) is sometimes provided as a cosmetic feature of a vehicle identification plate. In the backing plates (9, 9') of Figures 3 and 4, a gap (27) in the circumferential lip (19, 19') along part of its lower edge (25) is arranged to receive the tab (43) through the gap (27) and to closely conform to parts (45) of the outer edge of the tab (43). The tab may be provided in a contrasting colour to the main body (41) of the identification plate (17'), and preferably matches the backing plate (9,9') so that the gap (27) in the lower part of the lip (19, 19') is not immediately apparent to potential thieves or vandals. It may display security information, such as to warn potential thieves of the tamper-resistant characteristics of the plate, and may display contact information, such as for the vehicle owner, a security or vehicle tracking service, and/or a manufacturer to whom parts of vandalised or recovered stolen plates may be returned for forensic product analysis and/or replacement.

Rather than attempting to force the identification plate (17, 17') from the backing (9, 9') against the adhesive bond-which should prove time consuming and awkward, particularly in view of the peripheral lip (19, 19'), as discussed above-a skilled thief familiar with the location of the mounting screws on the vehicle might be expected to drill through the identification plate (17, 17') to expose and loosen or destroy the screws. However, the mounting screws are tamper-resistant and/or shielded by the protective caps (6) and thus cannot be easily accessed, damaged, or unscrewed. The concealed fasteners (15) are randomly located due to the unpredictable slot arrangement and their selective placement in some or all of the available slot intersections, so it is nearly impossible to drill them out without many wrong attempts that would severely hamper the person's progress and/or obliterate the identification plate, rendering it useless.

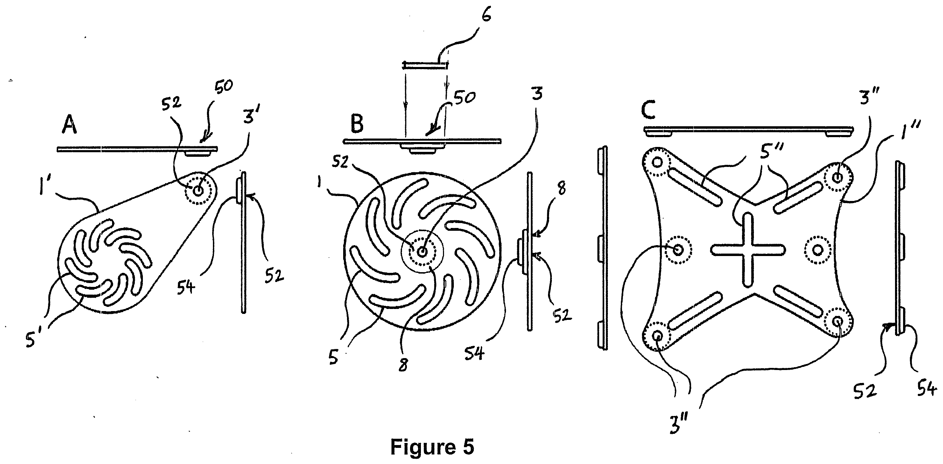

Figure 5 shows three alternative mounting brackets (A, B, C) for use in embodiments of the invention, as briefly described below.

Bracket A (1') has a generally elongate shape with a mounting hole (3') offset at one end from a ring of spiral slots (5') at the other end. It has a generally oval, tapered shape, with the mounting hole (3') located at the narrow end and the slots at the broad end. It is particularly suited to a vehicle that has identification plate mounting holes located close to the edges or corners of the identification plate, as the slots (5') can be positioned inwardly of the mounting screw hole (3'), allowing the bracket to be rotated about the mounting screw hole (3') within a limited range while securing it to the vehicle yet still to remain covered by the backing plate (9, 9') and identification plate (17, 17'). The mounting screw hole (3') is located in a press-formed depression (50) providing a recess (52) for the head of the mounting screw and, opposite, a spacing lug (54) that spaces the bracket from the vehicle to accommodate therebetween any fasteners (15), such as screws or blind rivets, that might protrude from the slots (5').

Bracket B (1) is as shown in Figures 1 and 2 and as generally described above. It has a similar depression (50) to that of bracket A, but with a two-tiered structure to provide a smaller deep recess (52) for a mounting screw head and a larger shallow recess (8) for receiving the protective cap (6) that covers the screw head.

Bracket C (1") has a plurality of mounting holes (3") and slots (5"). Some of the slots are obliquely oriented, while others run substantially perpendicular to those of the backing plate (11). Slots in the bracket that are provided at right angles to one another, such as in the form of a cross as shown, help to ensure that at least one slot in the bracket will intersect with those of the backing plate, no matter how the backing plate slots (11) are oriented. This bracket may be mounted to a vehicle by passing a fastener through one, or respective fasteners through more than one, of the mounting holes (3"). This allows the bracket to be mounted to a vehicle in a number of different orientations and positions.

In a further embodiment using bracket B, the backing plate has a respective ring of spiral slots for engaging with each bracket (1). Each ring of slots in the backing has a similar geometry to that of the corresponding bracket, except that the pitch of the spiral differs between the backing and the bracket to provide intersections where the slots overlap. For example, the slots may have exactly the same geometry in the backing plate and bracket, but with pitches of opposite polarity (i.e. flipped over) so that the spirals 'turn' in the opposite senses-this can advantageously ensure that the slots cross each other with a consistent angle of intersection and/or at regular or conveniently spaced intervals.

The above embodiments are described by way of example only, and their features may be interchangeably combined as will be apparent to the skilled reader. Many variations are possible without departing from the scope of the invention as defined in the appended claims.

## Claims

1. A tamper-resistant vehicle identification plate support comprising:
a mounting bracket (1) having therein a first slot (5) and a mounting aperture (3) through which the bracket is tamper-resistantly securable to a fixation point of a vehicle; and
a backing (9, 13) having therein a second slot (11) and being arranged to receive a vehicle identification plate, adhesively bonded to the backing, to cover the second slot,
wherein the backing (9, 13) and bracket (1) are positionable adjacent to one another, so that the first and second slots (5, 11) are at least partially overlapping to enable a fastener to be passed through the first and second slots (5, 11) to fasten the backing (9, 13) to the bracket (1), and so that the relative positions of the backing and bracket at least partly predetermine the location of the overlap.

2. A support according to claim 1 wherein the backing and bracket are positionable adjacent to one another so that the first and second slots are nonparallel in said overlapping slot area.

3. A support according to claim 1 or claim 2 wherein at least one of said first and second slot is substantially linear, at least one of said first and second slot is curved, and/or at least one of said first and second slot is arcuate.

4. A support according to claim 3 wherein one of said first and second slot is substantially straight and the other said slot is curved.

5. A support according to any preceding claim wherein at least one of said first and second slot defines part of a spiral centred at the mounting aperture (3).

6. A support according to any preceding claim wherein the second slot (11) is locally reinforced, such as by a metal plate (13) in the backing (9).

7. A support according to any preceding claim supporting a vehicle identification plate (17) mounted on the backing (9, 13) and covering the second slot (11).

8. A support according to any preceding claim wherein the bracket (1) comprises a plurality of said first slots (5) and/or wherein the backing (9, 13) comprises a plurality of said second slots (11).

9. A support according to any preceding claim comprising a plurality of said first or second slots being substantially parallel.

10. A support according to any preceding claim comprising a plurality of said first and/or second slots being substantially radially and/or spirally disposed.

11. A support according to any preceding claim wherein the bracket comprises a plurality of said first slots (5) disposed around the mounting aperture (3), such as distributed in a ring concentric with the mounting aperture.

12. A support according to any preceding claim wherein the bracket (1) is rotatably positionable about its mounting aperture (3) when securing it to a vehicle.

13. A vehicle having a tamper-evident support according to any preceding claim secured thereto, such as wherein the or at least one said mounting bracket (1) is unreleasably secured to the vehicle.

14. A method of securing an identification plate to a vehicle, the method including the steps of:
securing a mounting bracket (1) to a fixation point on a vehicle;
positioning a backing (9, 13) over the bracket so that a slot (11) in the backing and a slot (5) in the bracket at least partly overlap;
fastening the backing to the bracket at a location (15) where the slots (5, 11) overlap;
affixing an identification plate to the backing to cover a slot in the backing, by adhesively bonding the identification plate to the backing;
and
selecting from a range of valid possibilities the position(s), relative to the fixation point, of at least one of:
the bracket (1) when securing it to the vehicle;
the backing (9, 13) when fastening it to the mounting bracket; and
the location (15) at which to fasten the backing to the bracket.

15. A securing method according to claim 14 wherein securing the mounting bracket to the fixation point includes the step of aligning a mounting hole (3) in the bracket with the fixation point and orienting the bracket at random, or at random within a predefined range, relative to the mounting hole.

## Patentansprüche

1. Manipulationssichere Fahrzeugidentifikationsplatten-Haltevorrichtung, welche aufweist:
eine Montageklammer (1), wobei diese einen ersten Schlitz (5) und eine Montageöffnung (3) aufweist, durch welche die Klammer manipulationssicher an einem Fixierpunkt eines Fahrzeugs befestigbar ist; und
eine Stütze (9, 13), welche einen zweiten Schlitz (11) aufweist und angeordnet ist, eine Fahrzeugidentifikationsplatte aufzunehmen, welche adhäsiv mit der Stütze verbunden ist, um den zweiten Schlitz abzudecken, wobei die Stütze (9, 13) und die Klammer (1) derart nebeneinander positionierbar sind, dass die ersten und zweiten Schlitze (5, 11) wenigstens teilweise überlappen, um einem Befestigungsmittel zu ermöglichen, durch die ersten und zweiten Schlitze (5, 11) geführt zu werden, um die Stütze (9, 13) mit der Klammer (1) zu befestigen, und dass die Relativpositionen der Stütze und der Klammer zueinander wenigstens teilweise den Ort der Überlappung festlegen.

2. Haltevorrichtung nach Anspruch 1, wobei die Stütze und die Klammer derart nebeneinander positionierbar sind, dass die ersten und zweiten Schlitze nicht parallel in besagtem überlappenden Schlitzbereich sind.

3. Haltevorrichtung nach einem der Ansprüche 1 oder 2, wobei wenigstens einer von besagtem ersten und zweiten Schlitz im Wesentlichen linear, wenigstens einer von besagtem ersten und zweiten Schlitz gekrümmt und/oder wenigstens einer von besagtem ersten und zweiten Schlitz bogenförmig ist.

4. Haltevorrichtung nach Anspruch 3, wobei einer von besagtem ersten und zweiten Schlitz im Wesentlichen gerade und der andere besagte Schlitz gekrümmt ist.

5. Haltevorrichtung nach einem der vorangehenden Ansprüche, wobei wenigstens einer von besagtem ersten und zweiten Schlitz einen Teil einer Spirale definiert, die zu der Montageöffnung (3) hin zentriert ist.

6. Haltevorrichtung nach einem der vorangehenden Ansprüche, wobei der zweite Schlitz (11) lokal verstärkt ist, beispielsweise mit einer Metallplatte (13) in der Stütze (9).

7. Haltevorrichtung nach einem der vorangehenden Ansprüche, welche eine Fahrzeugidentifikationsplatte (17) hält, die an der Stütze (9, 13) befestigt ist und den zweiten Schlitz (11) abdeckt.

8. Haltevorrichtung nach einem der vorangehenden Ansprüche, wobei die Klammer (1) eine Vielzahl an besagten ersten Schlitzen (5) und/oder wobei die Stütze (9, 13) eine Vielzahl an besagten zweiten Schlitzen (11) aufweist.

9. Haltevorrichtung nach einem der vorangehenden Ansprüche, welche eine Vielzahl an besagten ersten oder zweiten Schlitzen aufweist, die im Wesentlichen parallel sind.

10. Haltevorrichtung nach einem der vorangehenden Ansprüche, welche eine Vielzahl an ersten und/oder zweiten Schlitzen aufweist, die im Wesentlichen radial und/oder spiralförmig angeordnet sind.

11. Haltevorrichtung nach einem der vorangehenden Ansprüche, wobei die Klammer eine Vielzahl an besagten ersten Schlitzen (5) aufweist, welche um die Montageöffnung (3), beispielsweise ringförmig verteilt und konzentrisch zu der Montageöffnung, herum angeordnet sind.

12. Haltevorrichtung nach einem der vorangehenden Ansprüche, wobei die Klammer (1) rotierbar um ihre Montageöffnung (3) positionierbar ist, wenn sie an einem Fahrzeug befestigt wird.

13. Fahrzeug, welches eine manipulationssichere Stütze nach einem der vorangehenden Ansprüche aufweist, welche mit diesem befestigt ist, wobei zum Beispiel die oder wenigstens eine besagte Montageklammer (1) nicht lösbar an dem Fahrzeug befestigt ist.

14. Verfahren zur Befestigung einer Identifikationsplatte an einem Fahrzeug, wobei das Verfahren folgende Schritte aufweist:
Befestigen einer Montageklammer (1) an einem Fixierpunkt an einem Fahrzeug;
Positionieren einer Stütze (9, 13) derart über der Klammer, dass ein Schlitz (11) in der Stütze und ein Schlitz (5) in der Klammer wenigstens teilweise überlappen;
Befestigen der Stütze an der Klammer an einem Ort (15), an dem die Schlitze (5, 11) überlappen;
Anbringen einer Identifikationsplatte an der Stütze zum Abdecken eines Schlitzes in der Stütze, indem die Identifikationsplatte mit der Stütze adhäsiv verbunden wird; und
Auswahl der Position oder der Positionen aus einem Bereich an gültigen Möglichkeiten relativ zu dem Fixierpunkt, von wenigstens einer von:
die Klammer (1), wenn sie mit dem Fahrzeug befestigt wird;
die Stütze (9, 13), wenn sie mit der Montageklammer befestigt wird; und
der Ort (15), an dem die Stütze mit der Klammer befestigt wird.

15. Befestigungsverfahren nach Anspruch 14, wobei das Befestigen der Montageklammer mit dem Fixierpunkt den Schritt aufweist, dass eine Montageöffnung (3) in der Klammer mit dem Fixierpunkt ausgerichtet und die Klammer zufällig oder zufällig innerhalb einer vorbestimmten Bandbreite, relativ zur Montageöffnung, ausgerichtet wird.

## Revendications

1. Support de plaque d'identification de véhicule inviolable, comprenant :
une patte (1) de fixation ayant une première fente (5) et une ouverture (3) de montage, par laquelle la patte peut être fixée de manière inviolable à un point de fixation d'un véhicule et
un renforcement (9, 13) ayant en son sein une deuxième fente (11) et étant agencé pour recevoir une plaque d'identification de véhicule fixée par adhérence au renforcement afin de recouvrir la deuxième fente,
dans lequel le renforcement (9, 13) et la patte (1) peuvent être mis en position au voisinage l'un de l'autre, de manière à ce que les première et deuxième fentes (5, 11) se chevauchent au moins en partie pour permettre de passer une fixation dans les première et deuxième fentes (5, 11), afin de fixer le renforcement (9, 13) à la patte (1) et de manière à ce que les positions relatives du renforcement et de la patte déterminent à l'avance, au moins en partie, l'emplacement du chevauchement.

2. Support suivant la revendication 1, dans lequel le renforcement et la patte peuvent être placés au voisinage l'un de l'autre, de manière à ce que les première et deuxième fentes ne soient pas parallèles dans la zone de chevauchement des fentes.

3. Support suivant la revendication 1 ou la revendication 2, dans lequel au moins l'une de la première et de la deuxième fente est sensiblement linéaire, au moins l'une de la première et de la deuxième fente est incurvée et/ou au moins l'une de la première et de la deuxième fente est arquée.

4. Support suivant la revendication 3, dans lequel l'une de la première et de la deuxième fente est sensiblement rectiligne et l'autre fente est incurvée.

5. Support suivant l'une quelconque des revendications précédentes, dans lequel au moins l'une des première et deuxième fentes définit une partie d'une spirale centrée sur l'ouverture (3) de montage.

6. Support suivant l'une quelconque des revendications précédentes, dans lequel la deuxième fente (11) est renforcée localement, telle que par une plaque (13) métallique dans le renforcement (9).

7. Support suivant l'une quelconque des revendications précédentes, supportant une plaque (17) d'identification de véhicule montée sur le renforcement (9, 13) et recouvrant la deuxième fente (11).

8. Support suivant l'une quelconque des revendications précédentes, dans lequel la patte (1) comprend une pluralité de premières fentes (5) et/ou dans lequel le renforcement (9, 13) comprend une pluralité de deuxièmes fentes (11).

9. Support suivant l'une quelconque des revendications précédentes, comprenant une pluralité de premières ou de secondes fentes sensiblement parallèles.

10. Support suivant l'une quelconque des revendications précédentes, comprenant une pluralité de premières et/ou de secondes fentes disposées sensiblement radialement et/ou en spirale.

11. Support suivant l'une quelconque des revendications précédentes, dans lequel la patte comprend une pluralité de premières fentes (5) disposées autour de l'ouverture (3) de montage, telles que réparties en un anneau concentrique à l'ouverture de montage.

12. Support suivant l'une quelconque des revendications précédentes, dans lequel la patte (1) peut être mise en position en rotation autour de son ouverture (3) de montage lorsqu'elle est fixée à un véhicule.

13. Véhicule ayant un support inviolable suivant l'une quelconque des revendications précédentes, qui y est fixé, tel que le ou au moins une patte (1) de montage est fixée de manière inamovible au véhicule.

14. Procédé de fixation d'une plaque d'identification à un véhicule, le procédé comprenant les stades dans lesquels :
on fixe une patte (1) de montage à un point de fixation sur un véhicule;
on met en position un renforcement (9, 13) sur la patte, de manière à ce qu'une fente (11) du renforcement et une fente (5) de la patte se chevauchent au moins en partie;
on fixe le renforcement à la patte en un emplacement (15) où les fentes (5, 11) se chevauchent;
on fixe une plaque d'identification au renforcement pour recouvrir une fente du renforcement en liant par adhérence la plaque d'identification au renforcement et
on choisit parmi une gamme de possibilités valables la ou les positions par rapport au point de fixation d'au moins l'un de :
la patte (1) lorsqu'on la fixe au véhicule;
le renforcement (9, 13) lorsqu'on le fixe à la patte de montage et
l'emplacement (15) où fixer le renforcement à la patte.

15. Procédé de fixation suivant la revendication 14, dans lequel fixer la patte de montage au point de fixation comprend le stade d'alignement d'un trou (3) de montage de la patte sur le point de fixation et d'orientation de la patte au hasard ou au hasard dans une plage définie à l'avance par rapport au trou de montage.
